# EUROPÄISCHE PATENTSCHRIFT

(11) **EP 0 765 788 B1**
(45) Veröffentlichungstag und Bekanntmachung des Hinweises auf die Patenterteilung: **24.05.2000**
(21) Anmeldenummer: 96110956.8
(22) Anmeldetag: 06.07.1996
(51) Int. Cl.: B60T 11/32, B60T 17/04

(54) **Einrichtung zur Steuerung des Druckes in Druckmittelleitungen**
Device for controlling the pressure within pressure-pipes
Dispositif pour contrôler la pression dans des conduits sous pression

(30) Priorität: 30.09.1995 DE 19536663
(43) Veröffentlichungstag der Anmeldung: 02.04.1997
(73) Patentinhaber: WABCO GmbH & Co. OHG, 30453 Hannover (DE)
(72) Erfinder: Deike, Karl-Heinz, 30982 Pattensen (DE); Diekmeyer, Heinrich, 30890 Barsinghausen (DE); Meise, Gunther, 30855 Langenhagen (DE); Rodriguez, José, 30827 Garbsen (DE)
(74) Vertreter: Schrödter, Manfred, Dipl.-Ing.

(56) Entgegenhaltungen:
- EP-A- 0 576 889
- DE-A- 3 231 909
- DE-A- 4 206 172
- DE-C- 4 109 741
- DE-C- 4 125 964

## Beschreibung

Die Erfindung betrifft eine Einrichtung zur Steuerung des Druckes in Druckmittelleitungen gemäß dem Oberbegriff des Patentanspruchs 1.

Eine derartige Einrichtung ist aus der DE-OS 41 09 741 bekannt. Die in dieser Schrift gezeigte Einrichtung ist in einer mehrkreisig ausgebildeten druckmittelbetätigten Bremsanlage eines Fahrzeugs angeordnet.

Die bekannte Einrichtung besteht aus einem Mehrkreisschutzventil mit einer baulich integrierten, als 2/2-Wegeventil ausgebildeten Steuerventileinrichtung, welche erst dann eine Befüllung eines nachrangigen Kreises, wie z. B. eines Federspeicher-Bremskreises, ermöglicht, wenn in den vorrangigen Kreisen, wie z. B. den Betriebsbremskreisen, der für die Verkehrssicherheit des Fahrzeugs erforderliche Betriebsbremsdruck vorhanden ist. Dies ist bei einem als Federspeicher-Bremskreis ausgebildeten nachrangigen Kreis deshalb von besonderer Bedeutung, weil andernfalls in dem zu früh befüllten Federspeicher-Bremskreis die Federspeicher-Bremszylinder, z. B. durch ungewolltes Betätigen eines entsprechenden Ventils (z. B. eines Federspeicherlöseventils), bei Druckbeaufschlagung gelöst werden, bevor die Betriebsbremskreise in der Lage sind, das ungewollt ungebremste Fahrzeug wieder zu bremsen.

Bei einer solchen Einrichtung ist es nicht ganz auszuschliessen, daß es bei einer Undichtigkeit im Bereich des Ventils der Steuerventileinrichtung, z. B. durch Verschmutzung oder Abrieb der Dichtungen innerhalb der vom Betriebsbremsdruck gesteuerten Steuerventileinrichtung verursacht, nach längerer Standzeit des Fahrzeugs bei einer Druckmittelbefüllung vom Druckwert 0 oder annähernd 0 an zur vorzeitigen Befüllung mindestens eines nachrangigen Kreises, wie z. B. des Federspeicher-Bremskreises, kommen kann.

Dies kann dazu führen, daß beim Betätigen des Federspeicher-Löseventils die Federspeicherbremse (Feststellbremse) in die Lösestellung gelangt, bevor die Betriebsbremskreise den für ihre Funktion notwendigen Druck aufweisen und wirksam betätigt werden können.

Aus der DE 41 25 964 ist eine Einrichtung zur Steuerung des Druckes in Druckmittelleitungen bekannt, welche im wesentlichen den gleichen Aufbau aufweist wie die in der DE 41 09 741 beschriebene Einrichtung. Die Einrichtung gemäß DE 41 25 964 besitzt ebenfalls eine Steuerventileinrichtung, deren Ventil mittels eines mit einem Druckmittel beaufschlagbaren Kolbens von seiner Schließstellung in seine Offenstellung überführbar ist. Der Kolben weist eine mit dem Druck eines vorrangigen ersten Druckmittelkreises beaufschlagbare erste Wirkfläche und eine mit dem Druck eines vorrangigen zweiten Druckmittelkreises beaufschlagbare zweite Wirkfläche auf.

Abweichend von der Steuerventileinrichtung gemäß der DE 41 09 741 ist bei der in der DE 41 25 964 gezeigten Steuerventileinrichtung am Kolben, gleichsinnig mit der ersten Wirkfläche und mit der zweiten Wirkfläche, eine dritte Wirkfläche vorgesehen, die mit dem Druck eines nachrangigen dritten Druckmittelkreises beaufschlagbar ist. Durch diese Maßnahme wird erreicht, daß auch bei Auftreten eines Defektes an einem vorrangigen Druckmittelkreis das Ventil der Steuerventileinrichtung in seiner Offenstellung gehalten werden kann.

Der Erfindung liegt deshalb die Aufgabe zugrunde, eine Einrichtung der eingangs erwähnten Art in der Weise zu verbessern, daß auch bei Auftreten einer Undichtigkeit an der Steuerventileinrichtung in eine nachrangige Druckmittelleitung erst dann eine Druckmitteleinsteuerung erfolgt, wenn in einer vorrangigen Druckmittelleitung ein vorbestimmter Druck vorhanden ist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Ein besonderer Vorteil der Erfindung ist darin zu sehen, daß bei undichtem Einlaßventil der Steuerventileinrichtung Druckmittel nicht zu der nachrangigen Druckmittelleitung gelangen kann, wenn sich die Steuerventileinrichtung in ihrer Sperrstellung befindet, da dieses Druckmittel dann über das geöffnete Auslaßventil der Steuerventileinrichtung abfließen kann. Die Steuerventileinrichtung ist praktisch als 3/2-Wegeventil ausgebildet.

Das Auslaßventil der Steuerventileinrichtung wird erst dann von seiner Offenstellung in seine Schließstellung gebracht, wenn der Druck in wenigstens einer vorrangigen Druckmittelleitung, wie z. B. einer Druckmittelleitung eines Betriebsbremskreises, soweit angestiegen ist, daß seine Kraft ausreicht, um die Betätigungseinrichtung der Steuerventileinrichtung nach dem Schließen des Auslaßventils in eine das Einlaßventil der Steuerventileinrichtung öffnende Stellung zu bringen, um eine Druckmittelleitung eines nachrangigen Kreis, wie z. B. den Federspeicher-Bremskreis, zu befüllen.

Gemäß einer vorteilhaften Weiterbildung des Erfindungsgegenstandes ist an der Steuerventileinrichtung eine manuell betätigbare Druckknopfeinrichtung angeordnet, mittels welcher das Einlaßventil der Steuerventileinrichtung von seiner Sperrstellung in seine Durchgangsstellung gebracht werden kann.

Das Einlaßventil der Steuerventileinrichtung wechselt aus der Sperrstellung in die Durchgangsstellung somit nur dann, wenn die auf die Betätigungseinrichtung wirkende Druckkraft ausreicht, um das Auslaßventil zu schließen.

Eine solche Steuerventileinrichtung kann in allen Druckmittelanlagen eingesetzt werden, in denen die Notwendigkeit besteht, erst dann in eine nachrangige Druckmittelleitung Druck einzusteuern zu können, wenn der Druck in einer vorrangigen Druckmittelleitung eine vorbestimmte Höhe erreicht hat.

Die Anwendung der Erfindung ist auch nicht auf eine druckmittelbetätigbare Bremsanlage mit einem Vierkreisschutzventil beschränkt, sondern kann auch in Schutzventilen mit einer größeren oder geringeren Anzahl zusammengeschalteter Überströmventile eingesetzt werden.

Die erfindungsgemäße Einrichtung ermöglicht auch eine vorteilhafte Erfüllung einer gesetzgeberischen Forderung, die vorsieht, daß sich die Federspeicherbremsen eines Fahrzeugs nicht eher lösen dürfen, bis der Druck in wenigstens einem Betriebsbremskreis ausreichend hoch ist.

Wie bereits erwähnt, besteht ein weiterer Vorteil der Erfindung darin, daß mit der Ausbildung der Steuerventileinrichtung mit einem manuell betätigbaren Druckknopf für die Betätigungseinrichtung es ermöglicht wird, mit dem Fahrzeug trotz Störungen, z. B. auch in den Betriebsbremskreisen, einen Ortswechsel vornehmen zu können, um z. B. eine Reparaturstation zwecks Störungsbeseitigung aufzusuchen.

Ein Vorteil für den Fahrer ist auch darin zu sehen, daß er im Störungsfall durch das Druckentlastungsgeräusch an der Entlüftungsöffnung der Steuerventileinrichtung vor Antritt der Fahrt eine Mitteilung über eine Undichtigkeit erhält, die im Bereich des Einlaßventils der Steuerventileinrichtung vorliegt.

Die Anwendung der Erfindung ist, wie bereits erwähnt, nicht auf eine Fahrzeugbremsanlage mit einem Mehrkreisschutzventil beschränkt, sondern kann in allen Anlagen eingesetzt werden, die wenigstens zwei Druckmittelleitungen aufweisen, wobei in die eine Druckmittelleitung erst dann Druckmittel eingesteuert werden können soll, wenn in der anderen Druckmittelleitung bereits ein ausreichender Druck vorhanden ist.

Die Erfindung wird anhand von zwei Ausführungsbeispielen nachfolgend näher erläutert.

Es zeigen:
- Fig. 1: eine Einrichtung zur Steuerung des Druckmittels in den Druckmittelleitungen einer Fahrzeug-Bremsanlage mit einer Steuerventileinrichtung und
- Fig. 2: die Steuerventileinrichtung gemäß Fig. 1 mit Druckknopf zur manuellen Betätigung

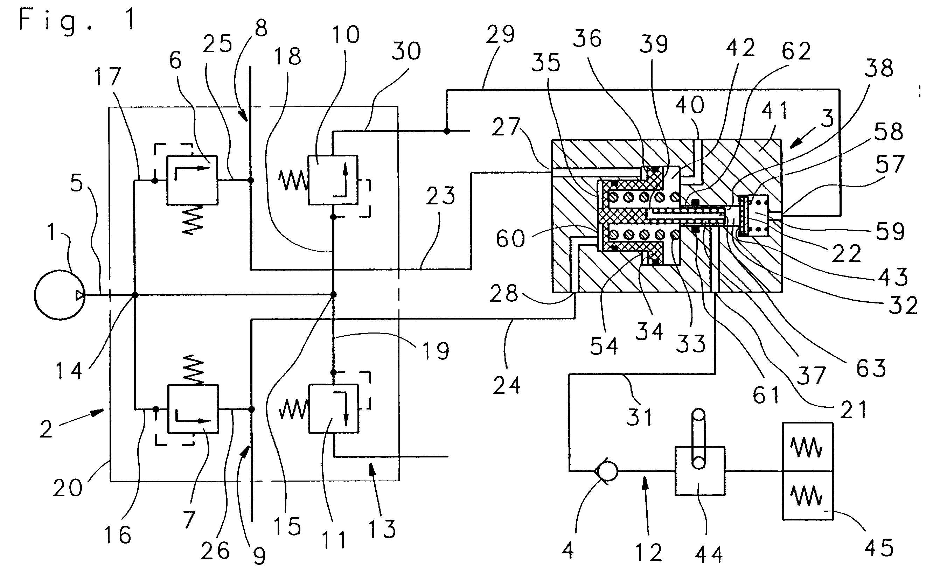

In Fig. 1 ist eine Einrichtung zur Steuerung des Druckmittels in den Druckmittelleitungen einer Fahrzeug-Bremsanlage dargestellt. Diese Einrichtung dient im vorliegenden Fall zur Befüllung der aus Betriebsbremskreisen und Federspeicher-Bremskreis bestehenden Fahrzeug-Bremsanlage in einer vorbestimmten Rangfolge, wobei die Betriebsbremskreise vorrangige Kreise sind und der Federspeicher-Bremskreis ein nachrangiger Kreis ist.

Die Fahrzeug-Bremsanlage enthält eine als Druckmittelquelle dienende Druckmittel-Versorgungsanlage (1) (z. B. Verdichter), eine als Mehrkreisschutzventil (2) ausgebildete Ventileinrichtung und eine Steuerventileinrichtung (3) mit nachgeordnetem Rückschlagventil (4).

An die Druckmittel-Versorgungsanlage (1) ist über eine Zentralbefüllungsleitung (5) das als Vierkreisschutzventil (2) ausgebildete Mehrkreisschutzventil angeschlossen. Im Vierkreisschutzventil (2) sind entsprechend einer festgelegten Befüllungsrangfolge als Überströmventile (6) und (7) ausgebildete Ventile für vorrangige Druckmittelkreise, z. B. für Betriebsbremskreise (8) und (9), sowie weitere als Überströmventile (10) und (11) ausgebildete Ventile für nachrangige Druckmittelkreise, z. B. für einen Federspeicher-Bremskreis (12) und einen Nebenverbraucherkreis (13) parallel zusammengeschaltet.

Das erste Überströmventil (6) ist einem als erster Betriebsbremskreis dienenden ersten Druckmittelkreis (8), das zweite Überströmventil (10) ist einem als Federspeicher-Bremskreis dienenden zweiten Druckmittelkreis (12), das dritte Überströmventil (7) ist einem als zweiter Betriebsbremskreis dienenden dritten Druckmittelkreis (9) und das vierte Überströmventil (11) ist einem als Nebenverbraucherkreis dienenden vierten Druckmittelkreis (13) zugeordnet. Zu je einem Überströmventil (6) bzw. (7) und (10) bzw. (11) führt von der Druckmittel-Versorgungsanlage (1) nach festgelegten Verzweigungspunkten (14) und (15) der Zentralbefüllungsleitung (5) jeweils eine Druckmittelleitung (16), (17), (18), (19). Die Befüllungsrangfolge ist je nach Druckmittelleitungszuführung zu den Überströmventilen (6), (7), (10), (11) und eingestelltem Öffnungsdruck der zugeordneten Überströmventile festgelegt.

Außerhalb eines die Überströmventile enthaltenden Gehäuses (20) (in punktgestrichelter Eingrenzung) des Vierkreisschutzventils (2) ist die Steuerventileinrichtung (3) angeordnet, der das Rückschlagventil (4) nachgeordnet ist. Die Steuerventileinrichtung (3) gehört zum Federspeicher-Bremskreis (12), der am zweiten Verzweigungspunkt (15) beginnt. Durch die Steuerventileinrichtung (3) ist sichergestellt, daß in die zum Federspeicher-Bremskreis (12) gehörigen Druckmittelleitungen erst dann Druckmittel eingesteuert wird, wenn in den zu den Betriebsbremskreisen (8) und (9) gehörigen Druckmittelleitungen ein vorbestimmter Druck vorhanden ist.

Die Steuerventileinrichtung (3) besitzt eine als Steuerkolben (34) ausgebildete Betätigungseinrichtung für ein kombiniertes Einlaß- und Auslaßventil (22, 43, 38), die in Abhängigkeit eines vorgegebenen betätigenden Druckes gegen die Kraft einer Feder (33) das Auslaßventil (22, 38) schließt und das Einlaßventil (22, 43) öffnet und so die Steuerventileinrichtung (3) für den Federspeicher-Bremskreis (12) aus einer Sperr- in eine Durchgangsstellung überführt. Zur Übertragung des den Steuerkolben (34) betätigenden Druckes sind als Steuerleitungen (23) und (24) dienende Druckmittelleitungen vorgesehen, die als Abzweigungen von die Überströmventile (6) und (7) verlassenden Druckmittelleitungen (25) und (26) an Steuereingänge (27) und (28) der Steuerventileinrichtung (3) zur Beaufschlagung des Steuerkolbens (34) mit Druckmittel geführt sind. Eine Druckmittelleitung (29), die mit einem Druckmitteleingang (57) der Steuerventileinrichtung (3) verbunden ist, ist nach dem Überströmventil (10) des Federspeicher-Bremskreises (12) von der zu einem Druckmittel-Vorratsbehälter (nicht gezeichnet) führenden Vorratsleitung (30) abgezweigt. Eine von einem Druckmittelausgang (21) der Steuerventileinrichtung (3) wegführende Druckmittelleitung (31) führt zum Rückschlagventil (4), welches ein Rückströmen des Druckmittels aus dem nachfolgenden Teil dieser Druckmittelleitung des Federspeicher-Bremskreises (12) in die Steuerventileinrichtung (3) bzw. in das Vierkreisschutzventil (2) unterbindet (Rückschlagventil (4) sperrt in Richtung auf den Druckmittelausgang (21) der Steuerventileinrichtung (3) zu).

Der den Steuerkolben (34) betätigende Druck kann als Summe der an den Steuereingängen (27) und (28) der Steuerventileinrichtung (3) anliegenden Drücke der Betriebsbremskreise (8) und (9) vorgegeben sein, wobei z. B. jeweils der einzelne Druck dem gesetzlich geforderten Betriebsbremsdruck eines Betriebsbremskreises (8) bzw. (9) entsprechen kann.

Die Steuerventileinrichtung (3) besteht im wesentlichen aus dem kombinierten Einlaß- und Auslaßventil (22, 43, 38) und dem Steuerkolben (34) zur Betätigung des kombinierten Einlaß- und Auslaßventils (22, 43, 38). Der Steuerkolben (34) ist als Stufenkolben ausgebildet und weist eine vom Druckmittel aus der Druckmittelleitung (23) beaufschlagbare erste Wirkfläche (36) und eine vom Druckmittel aus der Druckmittelleitung (24) beaufschlagbare zweite Wirkfläche (35) auf, wobei jede der beiden Wirkflächen (36) und (35) je eine Steuerkammer (54) bzw. (60) begrenzt. Die beiden Steuerkammern (54) und (60) sind mittels auf dem Steuerkolben (34) angeordneten Dichtringen gegeneinander abgedichtet.

Auf der den Wirkflächen (36) und (35) abgewandten Seite des Steuerkolbens (34) ist ein als Hohlstößel ausgebildeter Ventilstößel (37) angeordnet, der mit dem Steuerkolben (34) baulich verbunden ist. Der Ventilstößel (37) erstreckt sich durch eine Durchgangsöffnung (62) in einer einen als Federraum (42) dienenden Kolbenrückraum von einer Druckmittelausgangskammer (32) trennenden Wand hindurch in Richtung auf ein Ventilglied (22) des kombinierten Einlaß- und Auslaßventils (22, 43, 38) zu. In der die Durchgangsöffnung (62) begrenzenden Wand ist ein Dichtring (61) angeordnet, der dichtend sowohl an dieser Wand als auch an der Umfangsfläche des Ventilstößels (37) anliegt. Das freie Ende des Ventilstößels (37) ist als Auslaßsitz (38) ausgebildet und bildet mit dem dem Auslaßsitz (38) gegenüber im Gehäuse (41) der Steuerventileinrichtung (3) angeordneten Ventilglied (22) das Auslaßventil (22, 38) des kombinierten Einlaß- und Auslaßventils (22, 43, 38). Koaxial zum Ventilstößel (37) ist im Gehäuse (41) ein Einlaßsitz (43) angeordnet, der mit dem Ventilglied (22) das Einlaßventil (22, 43) des kombinierten Einlaß- und Auslaßventils (22, 43, 38) bildet. Das Ventilglied (22) wird von einer Feder (58), die sich an einer Wand des Gehäuses (41) abstützt, in Richtung auf den Einlaßsitz (43) und den Auslaßsitz (38) zu belastet am Einlaßsitz (43) gehalten. Ein am Auslaßsitz (38) beginnender Hohlraum (63) des Ventilstößels (37) steht über eine die Wand des Ventilstößels (37) durchdringende Querbohrung (39) mit einer sowohl als Druckmittelauslaß als auch als Beatmungsöffnung für den Federraum (42) dienenden Entlüftungsöffnung (40) in Verbindung, die in einer den Federraum (42) begrenzenden Außenwand des Gehäuses (41) angeordnet ist.

Im Federraum (42) ist die Feder (33) angeordnet, die den Steuerkolben (34) in Richtung vom Ventilglied (22) weg belastet. Über den Hohlraum (63) des Ventilstößels (37) und die Querbohrung (39) sowie den Federraum (42) ist die Druckmittelausgangskammer (32) mit der Entlüftungsöffnung (40) verbindbar. Über das kombinierte Einlaß- und Auslaßventil (22, 43, 38) ist die Druckmittelausgangskammer (32) in Abhängigkeit von der Stellung des Steuerkolbens (34) mit einer mit dem Druckmitteleingang (57) verbundenen Druckmitteleingangskammer (59) oder mit dem Druckmittelauslaß (40) verbindbar.

Die Spannkraft der Feder (33) ist auf die ebenfalls eingestellten Drücke der Betriebsbremskreise (8) und (9) abgestimmt. Die Summe der Drücke soll eine Bewegung des Steuerkolbens (34) bewirken. Solange der von den Überströmventilen (6) und (7) der Betriebsbremskreise (8) und (9) ausgehende Druck nicht dem festgelegten, zur Betätigung des Steuerkolbens (34) erforderlichen Druck entspricht, solange bleibt das Auslaßventil (22, 38) geöffnet und das Einlaßventil (22, 43) bleibt geschlossen.

Der Federspeicher-Bremskreis (12) enthält ein Feststellbremsventil (44) (Handbremsventil), mit dem im Zustand des Parkens des Fahrzeugs der nachfolgend angeschlossene Federspeicher-Bremszylinder (45) entlastet werden kann. Bei Entlastung wird eine nicht gezeichnete Feststellbremse eingelegt. Das Feststellbremsventil (44) ist in der den Druckmittelausgang (21) der Steuerventileinrichtung (3) mit dem Federspeicher-Bremszylinder (45) verbindenden Druckmittelleitung (31) angeordnet, wobei in dem Leitungsabschnitt zwischen dem Druckmittelausgang (21) der Steuerventileinrichtung (3) und dem Eingang des Feststellbremsventils (44) das Rückschlagventil (4) angeordnet ist.

Die Wirkungsweise der beschriebenen Einrichtung wird nachfolgend näher erläutert.

Im allgemeinen ist der Federspeicher-Bremskreis (12) nach längerem Parken vor Antritt der Fahrt druckmittelentlastet. Das bedeutet, daß die Feststellbremse eingelegt ist und das Druckmittel in der Druckmittelleitung (31) des Federspeicher-Bremskreises (12) den Druckwert (0 oder annähernd Null) aufweist. Nach Einschalten der Druckmittel-Versorgungsanlage (1) wird dem Vierkreisschutzventil (2) über die Zentralbefüllungsleitung (5) Druckmittel zugeführt. Nach Erreichen der Öffnungsdrücke öffnen die Überströmventile (6), (7), (10) und (11).

Die hinter dem zweiten Überströmventil (10) in den Federspeicher-Bremskreis (12) eingesetzte Steuerventileinrichtung (3) bleibt solange gesperrt -Einlaßventil (22, 43) geschlossen; Auslaßventil (22, 38) geöffnet -, bis in den Steuerleitungen (23) und (24) vorgegebene, festgelegte Betriebsbremsdruckwerte vorhanden sind. Sind die Drücke im ersten Druckmittelkreis (8) und im dritten Druckmittelkreis (9) und somit auch in den Steuerleitungen (23) und (24) auf eine vorbestimmte, als Öffnungsdruck für das Einlaßventil (43, 22) dienende Druckhöhe angestiegen, reicht ihre auf den Steuerkolben (34) ausgeübte Kraft aus, um die entgegengerichtet auf den Steuerkolben (34) einwirkende Kraft der Feder (33) zu überwinden. Der Steuerkolben (34) bewegt sich dann abwärts, in Richtung auf das Einlaßventil (22, 43) zu. Der Auslaßsitz (38) des Ventilstößels (37) kommt am Ventilglied (22) zur Anlage. Mit dem Kontakt zwischen dem Auslaßsitz (38) des Ventilstößels (37) und dem Ventilglied (22) ist das Auslaßventil (38, 22) geschlossen und somit der Druckmittelauslaß (40) gegen die Druckmittelausgangskammer (32) abgesperrt.

Bei der weiteren Abwärtsbewegung des Steuerkolbens (34) hebt der Ventilstößel (37) das Ventilglied (22) vom Einlaßsitz (43) ab. Das Einlaßventil (22, 43) ist dann geöffnet. Die Steuerventileinrichtung (3) befindet sich jetzt in ihrer Durchgangsstellung. Druckmittel aus der Druckmittelleitung (29) strömt über die Druckmitteleingangskammer (59), das geöffnete Einlaßventil (22, 43) und die Druckmittelausgangskammer (32) in die Druckmittelleitung (31). Das vom Druckmittelausgang (21) der Steuerventileinrichtung (3) kommende Druckmittel öffnet das Rückschlagventil (4) in der Druckmittelleitung (31) dann in Richtung auf das Feststellbremsventil (44) zu. Ist das Feststellbremsventil (44) ebenfalls auf Durchgang gestellt, strömt das Druckmittel in den Federspeicher-Bremszylinder (45) und löst die Feststellbremse. Somit liegt Betriebsbereitschaft des Fahrzeugs vor.

Ist das Einlaßventil (43, 22) des kombinierten Einlaß- und Auslaßventils (43, 38, 22) undicht, so daß nach dem Einschalten der Druckmittel-Versorgungsanlage (1) bereits Druckmittel aus der Druckmittelleitung (29) über die Druckmitteleingangskammer (59) und das defekte Einlaßventil (43, 22) in die Druckmittelausgangskammer (32) der Steuerventileinrichtung (3) gelangt, obwohl der Druck in den als Betriebsbremskreise dienenden ersten Druckmittelkreis (8) und dritten Druckmittelkreis (9) noch nicht die geforderte Höhe erreicht hat, kann dies nicht zu einer Druckeinsteuerung in den im Federspeicher-Bremskreis - zweiter Druckmittelkreis (12) - angeordneten Federspeicher-Bremszylinder (45) führen, da die Kraft des Druckes in den Steuerleitungen (23) und (24) noch nicht ausreicht, um den Steuerkolben (34) gegen die Kraft der Feder (33) in eine das Auslaßventil (38, 22) schließende und das Einlaßventil (43, 22) öffnende Stellung zu bringen. Das von der Druckmittelleitung (29) über das defekte Einlaßventil (43, 22) in die Druckmittelausgangskammer (32) der Steuerventileinrichtung (3) strömende Druckmittel gelangt über das geöffnete Auslaßventil (38, 22), die Querbohrung (39) in der Wand des Ventilstößels (37) und den Druckmittelauslaß (40) zur Druckmittelsenke (Atmosphäre) hin. In der zum Federspeicherbremszylinder (45) führenden Druckmittelleitung (31) kann sich kein zum Lösen der Federspeicher-Bremse erforderlicher Druck aufbauen. Somit ist sichergestellt, daß die Federspeicher-Bremse sich nach dem Betätigen des Feststellbremsventils (44) im Sinne des Lösens der Federspeicher-Bremse erst dann lösen kann, wenn der Druck in den Betriebsbremskreisen (8) und (9) die für eine Betriebsbremsung erforderliche Höhe erreicht hat.

In dem beschriebenen Ausführungsbeispiel wird zur Betätigung der Betätigungseinrichtung (34, 37) der Steuerventileinrichtung (3) der Druck aus zwei Betriebsbremskreisen (erster und dritter Druckmittelkreis (8) und (9)) genommen, so daß die Betätigung des Einlaßventils (43, 22) und des Auslaßventils (38, 22) der Steuerventileinrichtung (3) und somit auch die Befüllung des Verbrauchers (45) des zweiten Druckmittelkreises (12) in Abhängigkeit von dem Druck im ersten Druckmittelkreis (8) und dem Druck im dritten Druckmittelkreis (9) erfolgt. Selbstverständlich ist es auch möglich, auf den dritten Druckmittelkreis (9) zu verzichten, so daß die Befüllung des zweiten Druckmittelkreises (12) nur vom Druck im ersten Druckmittelkreis (8) in Abhängigkeit gebracht wird. Der Steuerkolben kommt bei einer Steuerventileinrichtung, die für einen solchen Einsatzfall gedacht ist, mit nur einer von einem Druckmittel beaufschalgbaren Wirkfläche aus.

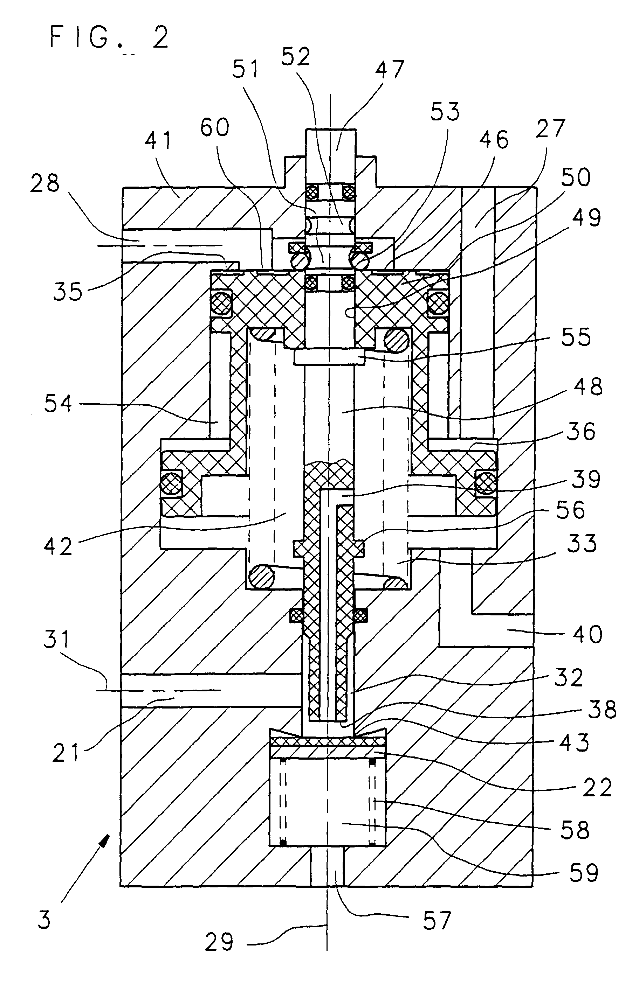

In Fig. 2 ist die Betätigungseinrichtung der in Fig. 1 gezeigten Steuerventileinrichtung (3) dahingehend baulich erweitert, daß im Falle eines Defektes in den Betriebsbremskreisen (8) und (9), wenn der Federspeicher-Bremszylinder (45) nicht mit Druckmittel beaufschlagt und deshalb die Bremse nicht gelöst werden kann, das Auslaßventil (38, 22) manuell geschlossen und das Einlaßventil (43, 22) manuell geöffnet werden kann.

Dazu ist in Anlehnung an Fig. 1 in Fig. 2 die Steuerventileinrichtung (3) als ein vom Betriebsbremsdruck gesteuertes Druckknopfventil ausgebildet. Da allein die Betätigungseinrichtung der Steuerventileinrichtung gemäß Fig. 2, gegenüber der Betätigungseinrichtung der Steuerventileinrichtung gemäß Fig. 1 bauliche Abweichungen aufweist, andere Bauteile der in Fig. 2 gezeigten Steuerventileinrichtung jedoch die gleiche Form und Funktion haben, wie die entsprechenden Bauteile der Steuerventileinrichtung nach Fig. 1, sind nur baulich geänderte bzw. neu hinzugefügte Teile in Fig. 2 mit neuen Bezugszeichen versehen.

Die Betätigungseinrichtung der in Fig. 1 gezeigten Steuerventileinrichtung ist gemäß Fig. 2 derart erweitert, daß ein als Hohlstößel ausgebildeter Ventilstößel (48) um einen baulich mit ihm verbundenen, mechanisch außerhalb des Steuerventilgehäuses (41) betätigbaren Druckknopf (47) zu einem Druckknopf-Ventilstößel (48, 47) verlängert ist. Der Druckknopf-Ventilstößel (48, 47) ist in einer mittigen Durchgangsöffnung (49) eines Steuerkolbens (50) abgedichtet eingepaßt und in axialer Richtung relativ zum Steuerkolben (50) bewegbar. Die aus dem Steuerkolben (50) und dem Druckknopf-Ventilstößel (48, 47) bestehende Betätigungseinrichtung (50, 48, 47) weist zwischen Steuerkolben (50) und Druckknopf (47) eine Ein/Aus-Rasteinrichtung auf, die aus zwei in der äußeren Mantelfläche des Druckknopfes (47) oder des Ventilstößels (48) angeordneten, als Ringnuten (51) und (52) ausgebildeten Vertiefungen und einem am Steuerkolben (50) befestigten als Federring (53) ausgebildeten Schnappelement besteht. Der Federring (53) ist in einer Ringnut (46) gelagert, die in der die Durchgangsöffnung (49) für den Druckknopf-Ventilstößel (48, 47) begrenzenden Wand des Steuerkolbens (50) angeordnet ist. Es ist natürlich auch möglich, die Ringnuten (51, 52) am Steuerkolben (50) und den Federring (53) am Druckknopf (47) oder am Ventilstößel (48) anzuordnen. Die Ein-Aus-Rasteinrichtung (51, 52, 53) dient zum Fixieren des Druckknopfes (47) und somit auch des Ventilstößels (48) in zwei unterschiedlichen Positionen am Steuerkolben (50).

Auf dem Umfang des Ventilstößels (48) sind ein erster umlaufender Vorsprung (55) und ein zweiter umlaufender Vorsprung (56) angeordnet, die sich quer zur Längsachse des Ventilstößels (48) verlaufend vom Ventilstößel (48) wegerstrecken. Der erste umlaufende Vorsprung (55) dient als ein erster Anschlag, mit welchem der Ventilstößel (48) in seiner Ausgangsstellung am Steuerkolben (50) anliegt und mittels welchem der Ventilstößel (48) bei einer Bewegung des Steuerkolbens (50) in Richtung auf das kombinierte Einlaß- und Auslaßventil (22, 43, 38) zu vom Steuerkolben (50) in der gleichen Richtung mitgenommen wird. Mittels des zweiten umlaufenden Vorsprungs (56) wird der Weg des Ventilstößels (48) in Richtung auf das kombinierte Einlaß- und Auslaßventil (22, 43, 38) zu begrenzt.

Der Druckknopf (47) kann einstückig mit dem Ventilstößel (48), als Fortsatz des Ventilstößels (48) ausgebildet sein. Es ist aber auch möglich, Ventilstößel (48) und Druckknopf (47) als zwei Einzelteile auszubilden, die im montierten Zustand in der Steuerventileinrichtung (3) miteinander in Wirkverbindung stehen bzw. miteinander in Wirkverbindung bringbar sind, wobei der Druckknopf als ein stößelartiges Teil ausgebildet sein kann. Der einteilig oder zweiteilig ausgebildete Druckknopf-Ventilstößel (49, 48) dient als Betätigungsmittel für das Einlaß- und Auslaßventil (22, 43, 38) der Steuerventileinrichtung (3) zur vom Steuerkolben (50) unabhängigen manuellen Betätigung des Einlaß- und Auslaßventils (22, 43, 38).

Die Wirkungsweise der in Fig. 2 gezeigten Einrichtung wird anhand der Figuren 1 und 2 nachfolgend näher erläutert.

Bei intakter Anlage und intakter Steuerventileinrichtung arbeitet die Steuerventileinrichtung gemäß Fig. 2 so wie die Steuerventileinrichtung nach Fig. 1.

Ist einer der beiden Betriebsbremskreise (8) oder (9) defekt, so daß in einer der beiden Steuerkammern (54) bzw. (60) der Steuerventileinrichtung (3) kein Steuerdruck oder ein zu geringer Steuerdruck vorhanden ist, so reicht die Kraft des Steuerdruckes in der jeweils anderen Steuerkammer oder auch die Kraft der Steuerdrücke in beiden Steuerkammern der Steuerventileinrichtung (3) nicht aus, um die entgegengerichtet auf den Steuerkolben (50) einwirkende Kraft der Feder (33) zu überwinden. Obwohl noch ein Betriebsbremskreis intakt ist, kann der Federspeicher-Bremszylinder (45) nicht in seine Bremslösestellung gebracht werden, da die Steuerventileinrichtung (3) aufgrund der zu geringen Steuerdruckhöhe in ihrer Entlüftungsstellung verbleibt. Die vom Druckmittelausgang (21) der Steuerventileinrichtung (3) zum Federspeicher-Bremszylinder (45) hinführende Druckmittelleitung (31) ist mittels des Einlaßventils (22, 43) gegen die Druckmitteleingangskammer (59) der Steuerventileinrichtung (3) und somit gegen die Druckmittelleitung (29) abgesperrt und über das geöffnete Auslaßventil (22, 38) sowie die Querbohrung (39) im Ventilstößel (48) und den Druckmittelauslaß (40) mit der Druckmittelsenke (Atmosphäre) verbunden.

Will der Fahrer das so nicht fahrbereite Fahrzeug, z. B. aus einer Gefahrenzone herausbringen, hat er die Möglichkeit, die Steuerventileinrichtung (3) manuell in die Durchgangsstellung umzuschalten.

Zu diesem Zweck wird der Druckknopf (47) mit Ventilstößel (48) manuell abwärts, in Richtung auf das kombinierte Einlaß- und Auslaßventil (22, 43, 38) zu verschoben. Der Ventilstößel (48) setzt mit dem Auslaßsitz (38) auf dem Ventilglied (22) auf, das Auslaßventil (22, 38) des kombinierten Einlaß- und Auslaßventils (22, 43, 38) gelangt in seine Schließstellung und das Einlaßventil (22, 43) des kombinierten Einlaß- und Auslaßventils (22, 43, 38) gelangt bei der weiteren Abwärtsbewegung des Ventilstößels (48) in seine Offenstellung. Über das geöffnete Einlaßventil (22, 43), die Druckmittelausgangskammer (32) und den Druckmittelausgang (21) der Steuerventileinrichtung (3) strömt dann Druckmittel aus der mit der Druckmittelleitung (29) verbundenen Druckmitteleingangskammer (59) der Steuerventileinrichtung (3) in die Druckmittelleitung (31) und weiter über das Rückschlagventil (4) sowie das auf Durchgang geschaltete Feststellbremsventil (44) in den Federspeicher-Bremszylinder (45), der dann vom Druckmittel in seine Bremslösestellung gebracht wird.

Bei der Verschiebebewegung des Druckknopf-Ventilstößels (47, 48) relativ zum Steuerkolben (50) kommen die erste Ringnut (51) des Druckknopfes (47) und der am Steuerkolben (50) angeordnete Federring (53) außer Eingriff und der Federring (53) schnappt in der Ventilbetätigungsstellung des Druckknopf-Ventilstößels (48, 47) - Auslaßventil (22, 38) geschlossen; Einlaßventil (22, 43) geöffnet-in die zweite Ringnut (52) des Druckknopfes (47) ein. Da der Druckknopf-Ventilstößel (47, 48) und der Steuerkolben (50) in Richtung ihrer Längsachse relativ zueinander bewegbar sind, verbleibt der Steuerkolben (50) bei einer manuellen Betätigung des Druckknopf-Ventilstößels (47, 48) in seiner Ausgangsstellung, wenn kein Steuerdruckmittel an den Steuereingängen (27) bzw. (28) der Steuerventileinrichtung (3) vorhanden ist oder wenn die Kraft des Steuerdruckes in den Steuerkammern (54) und (60) nicht ausreicht, um die entgegengerichtet auf den Steuerkolben (50) einwirkende Kraft der Feder (33) zu überwinden.

Ist die Bremsanlage des Fahrzeugs repariert und wird in den Betriebsbremskreisen (8) und (9) wieder Druck aufgebaut, so gelangt über die als Steuerleitungen dienenden Druckmittelleitungen (23) und (24) als Steuerdruckmittel dienendes Druckmittel in die beiden Steuerkammern (54) und (60) der Steuerventileinrichtung (3). Sind die die Wirkflächen (35) und (36) des Steuerkolbens (50) beaufschlagenden Drücke soweit angestiegen, daß die Kraft dieser Drücke die entgegengerichtet auf den Steuerkolben (50) einwirkende Kraft der Feder (33) überwindet, bewegt der Steuerkolben (50) sich abwärts, in Richtung auf das kombinierte Einlaß- und Auslaßventil (22, 43, 38) zu. Dabei kommen die zweite Ringnut (52) des Druckknopfes (47) des Ventilstößels (48) und der am Steuerkolben (50) angeordnete Federring (53) außer Eingriff und der Federring (53) rastet in die erste Ringnut (51) des Druckknopfes (47) ein.

Der Ventilstößel (48) kann bei der Abwärtsbewegung des Steuerkolbens (50) von diesem nicht weiter in Richtung auf das kombinierte Einlaß- und Auslaßventil (22, 43, 38) zu verschoben werden, da er mit seinem unteren ringförmigen Vorsprung (56) auf einer Gehäusewand aufliegt, die die Druckmittelausgangskammer (32) und den Federraum (42) der Steuerventileinrichtung (3) voneinander trennt. Der Ventilstößel (48) ist abgedichtet durch eine Durchgangsöffnung in dieser Wand hindurchgeführt.

Wenn die Steuerkammern (54) und (60) der Steuerventileinrichtung (3) anschließend entlüftet werden, wird der Steuerkolben (50) von der Feder (33) in Richtung von dem kombinierten Einlaß- und Auslaßventil (22, 43, 38) weg, zurück in seine Ausgangsstellung geschoben, wobei er den Druckknopf-Ventilstößel (47, 48) in der gleichen Richtung mitnimmt. Das Einlaßventil (22, 43) gelangt in seine Schließstellung und das Auslaßventil (22, 38) gelangt in seine Offenstellung. Die vom Druckmittelausgang (21) der Steuerventileinrichtung (3) zum Federspeicher-Bremszylinder (45) hinführende Druckmittelleitung (31) ist dann gegen die vom Mehrkreisschutzventil (2) zum Druckmitteleingang (57) der Steuerventileinrichtung (3) führende Druckmittelleitung (29) abgesperrt und mit dem zur Atmosphäre hinführenden Druckmittelauslaß (40) der Steuerventileinrichtung (3) verbunden.

Die Steuerventileinrichtung (3) nach den Ausführungsformen gemäß Figuren 1 und 2 kann auch vor den Überströmventilen (10) und (11) der nachrangigen Kreise bzw. vor dem zweiten Verzweigungspunkt (15) angeordnet werden. Ebenso ist ein baulicher Einsatz innerhalb des Gehäuses (20) des Vierkreisschutzventils (2) denkbar, wenn Zustandsänderungen innerhalb der nachrangigen Kreise (12, 13) in Abhängigkeit von technisch möglichen, oftmals gesetzlich vorgegebenen Druckwerten anderer Kreise, insbesondere vorrangiger Kreise (8) bwz. (9), vorgesehen sind.

Bei der Ventileinrichtung kann es sich, wie in den Ausführungsbeispielen beschrieben, um ein Mehrkreis-Schutzventil mit mehreren Überströmventilen handeln. Es ist aber auch möglich, die Ventileinrichtung z. B. als elektrisch, elektro-magnetisch oder von einem Druckmittel gesteuerte Ventileinrichtung auszubilden die z. B. zwei als 2/2-Wegeventile oder 3/2-Wegeventile aufweisende Ventile besitzt.

Jeder er erwähnten Druckmittelkreise (Betriebs-Bremskreis; Federspeicher-Bremskreis) kann von einer Druckmittelleitung oder von mehreren Druckmittelleitungen gebildet werden, wobei jede dieser Druckmittelleitungen wenigstens ein Gerät, wie z. B. Ventil, Federspeicher-Bremszylinder, Bremszylinder usw., zugeordnet sein kann.

## Patentansprüche

1. Einrichtung zur Steuerung des Druckes in Druckmittelleitungen mit folgenden Merkmalen:
a) es ist eine aus einer Druckmittelquelle (1) gespeiste Ventileinrichtung (2) vorgesehen, welche ein erstes Ventil (6) zur Druckmitteleinsteuerung in eine erste Druckmittelleitung (8) und ein zweites Ventil (10) zur Druckmitteleinsteuerung in eine zweite Druckmittelleitung (12) aufweist;
b) es ist eine Steuerventileinrichtung (3) zum Steuern des Druckes der zweiten Druckmittelleitung (12) in Abhängigkeit vom Druck in der ersten Druckmittelleitung (8) vorgesehen;
c) die Steuerventileinrichtung (3) weist eine Druckmitteleingangskammer (59) und eine mit einem Verbraucher (45) der zweiten Druckmittelleitung (12) verbundene bzw. verbindbare Druckmittelausgangskammer (32) sowie ein Einlaßventil (43, 22) zum Verbinden der Druckmittelausgangskammer (32) mit der Druckmitteleingangskammer (59) auf;
d) die Steuerventileinrichtung (3) enthält eine in Abhängigkeit vom Druck in der ersten Druckmittelleitung (8) aktivierbare Betätigungseinrichtung (34, 50, 37, 48) zur Betätigung des Einlaßventils (43, 22), wobei die Betätigungseinrichtung (34, 50, 37, 48) so ausgebildet und so zum Einlaßventil (43, 22) angeordnet ist, daß sie das Einlaßventil (43, 22) von seiner Schließstellung in seine Offenstellung überführt, wenn der Druck in der ersten Druckmittelleitung (8) auf eine als Öffnungsdruck für das Einlaßventil (43, 22) festgelegte Druckhöhe angestiegen ist;
gekennzeichnet durch die folgenden Merkmale:
e) die Druckmitteleingangskammer (59) der Steuerventileinrichtung (3) ist mit dem vom zweiten Ventil (10) ausgesteuerten Druck beaufschlagbar;
f) die Steuerventileinrichtung (3) enthält ein Auslaßventil (38, 22) zum Verbinden der Druckmittelausgangskammer (32) mit einer Druckmittelsenke, welches derart mit der Betätigungseinrichtung (34, 50, 37, 48) in Wirkverbindung steht, daß es von dieser in Abhängigkeit von dem vorbestimmten Öffnungsdruck für das Einlaßventil (43, 22) von seiner Offenstellung in seine Schließstellung bringbar ist, bevor das Einlaßventil (43, 22) in seine Offenstellung gebracht wird.

2. Einrichtung nach Anspruch 1, dadurch gekennzeichnet, daß die Ventileinrichtung (2) als Mehrkreisschutzventil ausgebildet ist und sowohl das erste Ventil (6) als auch das zweite Ventil (10) als Überströmventil ausgebildet ist.

3. Einrichtung nach wenigstens einem der vorhergehenden Ansprüche, gekennzeichnet durch die folgenden Merkmale:
a) die Betätigungseinrichtung besteht aus einem Steuerkolben (34, 50) und einem Ventilstößel (37, 48), wobei der Ventilstößel (37, 48) mit dem Steuerkolben (34, 50) in Verbindung steht;
b) der Ventilstößel (37, 48) ist durch eine Öffnung (62) in einer die Druckmittelausgangskammer (32) von einem Kolbenrückraum (42) trennenden Wand mittels eines Dichtelementes (61) abgedichtet hindurchgeführt und erstreckt sich mit seinem dem Steuerkolben (34, 50) abgewandten Ende in die Druckmittelausgangskammer (32) hinein, wobei das dem Steuerkolben (34, 50) abgewandte Ende des Ventilstößels (37, 48) einem Ventilglied (22) zugewandt ist, welches mit einem Einlaßsitz (43) das Einlaßventil (43, 22) bildet.
c) der Ventilstößel (37, 48) ist an seinem dem Ventilglied (22) zugewandten Ende als Auslaßsitz (38) ausgebildet und weist eine am Auslaßsitz (38) beginnende, sich in den Ventilstößel (37, 48) hineinerstreckende Bohrung (63) auf, an die eine in den Kolbenrückraum (42) mündende Querbohrung (39) anschließt;
d) der Auslaßsitz (38) bildet mit dem Ventilglied (22) das Auslaßventil (38, 22);
e) der Kolbenrückraum (42) ist über eine Entlüftungsöffnung (40) in der Wand des Gehäuses (41) der Steuerventileinrichtung (3) mit der Druckmittelsenke verbunden;
f) als Rückstellkraft für den Steuerkolben (34, 50) dient eine Feder (33), die im Kolbenrückraum (42) angeordnet ist und den Steuerkolben (34, 50) in Schließrichtung des Einlaßventils (43, 22) und in Öffnungsrichtung des Auslaßventils (38, 22) beaufschlagt;
g) der Steuerkolben (34, 50) weist auf seiner dem Kolbenrückraum (42) abgewandten Seite wenigstens eine Wirkfläche (35, 36) auf, die mit dem Druckmittel wenigstens einer von der zweiten Druckmittelleitung (12) unabhängigen Druckmittelleitung (8, 9) beaufschlagbar ist.

4. Einrichtung nach wenigstens einem der vorhergehenden Ansprüche, gekennzeichnet durch die folgenden Merkmale:
a) der Steuerkolben (34, 50) weist eine erste Wirkfläche (36) und eine zweite Wirkfläche (35) auf, wobei die erste Wirkfläche (36) eine erste Steuerkammer (54) und die zweite Wirkfläche (35) eine zweite Steuerkammer (60) begrenzt;
b) die erste Steuerkammer (54) ist über einen Steuereingang (27) der Steuerventileinrichtung (3) und eine als Steuerleitung (23) dienende Druckmittelleitung mit der ersten Druckmittelleitung (8) verbunden;
c) die zweite Steuerkammer (60) ist über einen zweiten Steueranschluß (28) der Steuerventileinrichtung (3) und eine als Steuerleitung (24) dienende Druckmittelleitung mit einer von der ersten Druckmittelleitung (8) unabhängigen dritten Druckmittelleitung (9) verbunden;
d) ein mit der Druckmitteleingangskammer (59) der Steuerventileinrichtung (3) verbundener Druckmitteleingang (57) steht über eine Druckmittelleitung (29) mit dem Druckmittelausgang des zweiten Ventils (10) in Verbindung.

5. Einrichtung nach Anspruch 3, dadurch gekennzeichnet, daß mit dem Ventilstößel (48) in Wirkverbindung stehende oder in Wirkverbindung bringbare Betätigungsmittel für das Einlaßventil (43, 22) und das Auslaßventil (22, 38) vorgesehen sind, die unabhängig vom Steuerkolben (50) manuell betätigbar sind.

6. Einrichtung nach Anspruch 5, dadurch gekennzeichnet, daß die Betätigungsmittel für das Einlaßventil (43, 22) und das Auslaßventil (22, 38) aus einem mit dem Ventilstößel (48) baulich verbundenen, als Druckknopf dienenden Fortsatz des Ventilstößels (48) bestehen, wobei der Fortsatz (47) aus dem Gehäuse (41) der Steuerventileinrichtung (3) herausgeführt ist.

7. Einrichtung nach Anspruch 5, dadurch gekennzeichnet, daß die Betätigungsmittel für das Einlaßventil (43, 22) und das Auslaßventil (22, 38) aus einem mit dem Ventilstößel (48) in Wirkverbindung stehenden oder in Wirkverbindung bringbaren stößelartigen Druckknopf (47) bestehen, wobei der Ventilstößel (48) und/oder der Druckknopf (47) in eine mittige Ausnehmung (49) des Steuerkolbens (50) abgedichtet eingepaßt und in axialer Richtung relativ zum Steuerkolben (50) bewegbar ist, wobei der Druckknopf (47) aus dem Gehäuse (41) der Steuerventileinrichtung (3) herausgeführt ist.

8. Einrichtung nach wenigstens einem der vorhergehenden Ansprüche 5 oder 6 oder 7, dadurch gekennzeichnet, daß die Betätigungsmittel zwischen Steuerkolben (50) und Druckknopf (47) oder zwischen Steuerkolben (50) und Ventilstößel (48) eine Ein-/Aus-Rasteinrichtung aufweisen, mittels welcher der Ventilstößel (48) in zwei unterschiedlichen Positionen am Steuerkolben (50) fixierbar ist.

9. Einrichtung nach Anspruch 8, dadurch gekennzeichnet, daß zum Fixieren des Ventilstößels (48) am Steuerkolben (50) am Ventilstößel (48) oder am Druckknopf (47) oder am Steuerkolben (50) eine erste Vertiefung (51) und eine zweite Vertiefung (52) vorgesehen sind, in welche ein am Steuerkolben (50) oder am Ventilstößel (48) oder am Druckknopf (47) angeordnetes Schnappelement (53) einrastet.

10. Einrichtung nach wenigstens einem der vorhergehenden Ansprüche 5, 6, 7, 8 oder 9, dadurch gekennzeichnet, daß am Ventilstößel (48) ein erster Anschlag (55) und ein zweiter Anschlag (56) angeordnet sind, wobei der erste Anschlag (55) so zum Steuerkolben (50) angeordnet ist, daß bei einer Bewegung des Steuerkolbens (50) in Öffnungsrichtung des Einlaßventils (43, 22) der Ventilstößel (48) vom Steuerkolben (50) in der gleichen Richtung mitgenommen wird, und der zweite Anschlag (56) so zu der den Kolbenrückraum (42) von der Druckmittelausgangskammer (32) trennenden Wand angeordnet ist, daß der zweite Anschlag (56) bei einem Hub des Ventilstößels (48) in Öffnungsrichtung des Einlaßventils (43, 22) den Hub des Ventilstößels (48) in dieser Richtung begrenzt.

11. Einrichtung nach wenigstens einem der vorhergehenden Ansprüche, dadurch gekennzeichnet, daß die Steuerventileinrichtung (3) in die Ventileinrichtung (2) integriert ist.

12. Einrichtung nach Anspruch 9, dadurch gekennzeichnet, daß die erste Vertiefung (51) und die zweite Vertiefung (52) so zueinander und so zu dem Schnappelement (53) angeordnet sind, daß bei einer Betätigung des Druckknopfes (47) in Schließrichtung des Auslaßventils (38, 22) und in Öffnungsrichtung des Einlaßventils (43, 22) der Ventilstößel (48) mit Druckknopf (47) und der Steuerkolben (50) relativ zueinander verschoben werden, wobei das Schnappelement (53) von der ersten Vertiefung (51) in die zweite Vertiefung (52) gelangt und daß bei einer folgenden Beaufschlagung des Steuerkolbens (50) mit Steuerdruck und einer daraus resultierenden Bewegung des Steuerkolbens (50) in Richtung auf das Einlaßventil (43, 22) zu eine Relativbewegung zwischen Steuerkolben (50) und Ventilstößel (48) mit Druckknopf (47) erfolgt, wobei das Schnappelement (53)dann wieder von der zweiten Vertiefung (52) in die erste Vertiefung (51) gelangt und bei einem nachfolgenden Abbau von Steuerdruck der Ventilstößel (48) mit Druckknopf (47) vom Steuerkolben (50) in Richtung auf seine Ausgangsstellung zu mitgenommen wird.

13. Einrichtung nach wenigstens einem der vorhergehenden Ansprüche, dadurch gekennzeichnet, daß zwischen der Druckmittelausgangskammer (32) der Steuerventileinrichtung (3) und dem Verbraucher (45) ein in Richtung auf die Druckmittelausgangskammer (32) zu sperrendes Rückschlagventil (4) angeordnet ist.

14. Druckmittelbetätigte Fahrzeugbremsanlage mit einer Einrichtung nach Anspruch 4, dadurch gekennzeichnet, daß die erste Druckmittelleitung (8) einem als ein erster Betriebsbremskreis dienenden ersten Druckmittelkreis, die zweite Druckmittelleitung (12) einem als Feststellbremskreis dienenden zweiten Druckmittelkreis und die dritte Druckmittelleitung (9) einem als ein zweiter Betriebsbremskreis dienenden dritten Druckmittelkreis der druckmittelbetätigten Fahrzeug-bremsanlage zugeordnet ist.

15. Druckmittelbetätigte Fahrzeugbremsanlage mit einer Einrichtung nach Anspruch 14, dadurch gekennzeichnet, daß das erste Ventil (6) dem als erster Betriebsbremskreis dienenden ersten Druckmittelkreis, das zweite Ventil (10) dem als Feststellbremskreis dienenden zweiten Druckmittelkreis und ein drittes Ventil (7) dem als zweiter Betriebsbremskreis dienenden dritten Druckmittelkreis zugeordnet ist.

16. Druckmittelbetätigte Fahrzeugbremsanlage mit einer Einrichtung nach Anspruch 15, dadurch gekennzeichnet, daß das dritte Ventil (7) als Überströmventil ausgebildet ist.

17. Druckmittelbetätigte Fahrzeugbremsanlage mit einer Einrichtung nach wenigstens einem der vorhergehenden Ansprüche 14 oder 15, dadurch gekennzeichnet, daß der Druckmittelausgang (21) der Steuerventileinrichtung (3) über eine Druckmittelleitung (31) und ein in dieser angeordnetes Feststellbremsventil (44) mit einem als Verbraucher dienenden Federspeicherbremszylinder (45) verbindbar ist.

## Claims

1. Arrangement for controlling the pressure in pressure medium lines, having the following features:
a) there is provided a valve arrangement (2) fed from a pressure medium source (1), which valve arrangement (2) has a first valve (6) for controlling pressure medium entry into a first pressure medium line (8) and a second valve (10) for controlling pressure medium entry into a second pressure medium line (12);
b) a control valve arrangement (3) is provided for controlling the pressure of the second pressure medium line (12) in dependence upon the pressure in the first pressure medium line (8);
c) the control valve arrangement (3) has a pressure medium inlet chamber (59) and a pressure medium outlet chamber (32), the latter being connected to, or connectible to, a load (45) of the second pressure medium line (12), and also an inlet valve (43, 22) for connecting the pressure medium outlet chamber (32) to the pressure medium inlet chamber (59);
d) for actuation of the inlet valve (43, 22), the control valve arrangement (3) comprises an actuating device (34, 50, 37, 48), which is arranged to be activated in dependence upon the pressure in the first pressure medium line (8), the actuating device (34, 50, 37, 48) being so constructed and so arranged with respect to the inlet valve (43, 22) that it changes the inlet valve (43, 22) from its closed position to its open position when the pressure in the first pressure medium line (8) has risen to a pressure level defined as the opening pressure for the inlet valve (43, 22);
characterized by the following features:
e) the pressure medium inlet chamber (59) of the control valve arrangement (3) is arranged to be acted upon by pressure delivered under the control of the second valve (10);
f) the control valve arrangement (3) comprises an outlet valve (38, 22) for connecting the pressure medium outlet chamber (32) to a pressure medium sink, which outlet valve (38, 22) is in operative connection with the actuating device (34, 50, 37, 48) in such a manner that it is arranged to be brought by the latter from its open position into its closed position in dependence upon the predetermined opening pressure for the inlet valve (43, 22) before the inlet valve (43,22) is brought into its open position.

2. Arrangement according to claim 1, characterized in that the valve arrangement (2) is in the form of a multi-circuit protection valve and both the first valve (6) and the second valve (10) are in the form of overflow valves.

3. Arrangement according to at least one of the preceding claims, characterized by the following features:
a) the actuating device consists of a control piston (34, 50) and a valve stem (37, 48), the valve stem (37, 48) being connected to the control piston (34, 50);
b) the valve stem (37, 48), sealed by means of a sealing element (61), passes through an opening (62) in a wall separating the pressure medium outlet chamber (32) from a space (42) behind the piston and, at its end remote from the control piston (34, 50), extends into the pressure medium outlet chamber (32), the end of the valve stem (37, 48) remote from the control piston (34, 50) facing a valve member (22), which together with an inlet seat (43) constitutes the inlet valve (43, 22);
c) the valve stem (37, 48), at its end facing the valve member (22), is constructed as an outlet seat (38) and has a bore (63) starting at the outlet seat (38) and extending into the valve stem (37, 48), which bore (63) is in communication with a transverse bore (39), which opens into the space (42) behind the piston;
d) the outlet seat (38), together with the valve member (22), constitutes the outlet valve (38, 22);
e) the space (42) behind the piston is connected to the pressure medium sink by way of a vent opening (40) in the wall of the housing (41) of the control valve arrangement (3);
f) a spring (33) provides the restoring force for the control piston (34, 50), which spring (33) is arranged in the space (42) behind the piston and acts upon the control piston (34, 50) in the closing direction of the inlet valve (43, 22) and the opening direction of the outlet valve (38, 22);
g) the control piston (34, 50) has, on its side remote from the space (42) behind the piston, at least one working area (35, 36), which is arranged to be acted upon by the pressure medium from at least one pressure medium line (8, 9) independent of the second pressure medium line (12).

4. Arrangement according to at least one of the preceding claims, characterized by the following features:
a) the control piston (34, 50) has a first working area (36) and a second working area (35), the first working area (36) bounding a first control chamber (54) and the second working area (35) bounding a second control chamber (60);
b) the first control chamber (54) is connected to the first pressure medium line (8) by way of a control inlet (27) of the control valve arrangement (3) and a pressure medium line serving as a control line (23);
c) the second control chamber (60) is connected to a third pressure medium line (9), which is independent of the first pressure medium line (8), by way of a second control connection (28) of the control valve arrangement (3) and a pressure medium line serving as a control line (24);
d) a pressure medium inlet (57) connected to the pressure medium inlet chamber (59) of the control valve arrangement (3) is connected to the pressure medium outlet of the second valve (10) by way of a pressure medium line (29).

5. Arrangement according to claim 3, characterized in that there are provided for the inlet valve (43, 22) and the outlet valve (22, 38) actuating means which are in operative connection with, or arranged to be brought into operative connection with, the valve stem (48), which actuating means are arranged to be manually actuated independently of the control piston (50).

6. Arrangement according to claim 5, characterized in that the actuating means for the inlet valve (43, 22) and the outlet valve (22, 38) consist of an extension of the valve stem (48) structurally connected to the valve stem (48) and serving as a push-button, the extension (47) projecting out from the housing (41) of the control valve arrangement (3).

7. Arrangement according to claim 5, characterized in that the actuating means for the inlet valve (43, 22) and the outlet valve (22, 38) consist of a stem-like push-button (47), which is in operative connection with, or arranged to be brought into operative connection with, the valve stem (48), with the valve stem (48) and/or the push-button (47) being fitted, sealed, into a central hole (49) in the control piston (50) and being movable relative to the control piston (50) in an axial direction, and with the push-button (47) projecting out from the housing (41) of the control valve arrangement (3).

8. Arrangement according to at least one of the preceding claims 5 or 6 or 7, characterized in that the actuating means have, between the control piston (50) and the push-button (47) or between the control piston (50) and the valve stem (48), a latching/unlatching device, by means of which the valve stem (48) is arranged to be secured on the control piston (50) in two different positions.

9. Arrangement according to claim 8, characterized in that, for securing the valve stem (48) on the control piston (50), there are provided on the valve stem (48) or on the push-button (47) or on the control piston (50) a first recess (51) and a second recess (52), in which a snap-in element (53) arranged on the control piston (50) or on the valve stem (48) or on the push-button (47) engages.

10. Arrangement according to at least one of the preceding claims 5, 6, 7, 8 or 9, characterized in that a first stop (55) and a second stop (56) are arranged on the valve stem (48), the first stop (55) being so arranged with respect to the control piston (50) that, when the control piston (50) is moved in the opening direction of the inlet valve (43, 22), the valve stem (48) is carried along in the same direction by the control piston (50), and the second stop (56) being so arranged with respect to the wall separating the space (42) behind the piston from the pressure medium outlet chamber (32) that, when the valve stem (48) is lifted in the opening direction of the inlet valve (43, 22), the second stop (56) limits the lifting of the valve stem (48) in that direction.

11. Arrangement according to at least one of the preceding claims, characterized in that the control valve arrangement (3) is integrated into the valve arrangement (2).

12. Arrangement according to claim 9, characterized in that the first recess (51) and the second recess (52) are so arranged with respect to one another and so arranged with respect to the snap-in element (53) that, when the push-button (47) is actuated in the closing direction of the outlet valve (38, 22) and the opening direction of the inlet valve (43, 22), the valve stem (48), together with the push-button (47), and the control piston (50) are moved relative to one another, the snap-in element (53) proceeding from the first recess (51) into the second recess (52), and, when control pressure subsequently acts upon the control piston (50) and the control piston (50) consequently moves towards the inlet valve (43, 22), relative movement between the control piston (50) and the valve stem (48), together with the push-button (47), occurs, with the snap-in element (53) then proceeding from the second recess (52) back into the first recess (51), and, when the control pressure is subsequently reduced, the valve stem (48), together with the push-button (47), is carried along by the control piston (50) in the direction of its starting position.

13. Arrangement according to at least one of the preceding claims, characterized in that, between the pressure medium outlet chamber (32) of the control valve arrangement (3) and the load (45), there is arranged a non-return valve (4) for blocking in the direction of the pressure medium outlet chamber (32).

14. Pressure-medium-actuated vehicle braking system having an arrangement according to claim 4, characterized in that the first pressure medium line (8) is associated with a first pressure medium circuit serving as a first service brake circuit, the second pressure medium line (12) is associated with a second pressure medium circuit serving as a parking brake circuit, and the third pressure medium line (9) is associated with a third pressure medium circuit serving as a second service brake circuit in the pressure-medium-actuated vehicle braking system.

15. Pressure-medium-actuated vehicle braking system having an arrangement according to claim 14, characterized in that the first valve (6) is associated with the first pressure medium circuit serving as a first service brake circuit, the second valve (10) is associated with the second pressure medium circuit serving as a parking brake circuit, and a third valve (7) is associated with the third pressure medium circuit serving as a second service brake circuit.

16. Pressure-medium-actuated vehicle braking system having an arrangement according to claim 15, characterized in that the third valve (7) is in the form of an overflow valve.

17. Pressure-medium-actuated vehicle braking system having an arrangement according to at least one of the preceding claims 14 or 15, characterized in that the pressure medium outlet (21) of the control valve arrangement (3) is arranged to be connected, by way of a pressure medium line (31) and a parking brake valve (44) arranged therein, to a spring-loaded brake cylinder (45) serving as a load.

## Revendications

1. Dispositif pour commander la pression dans des conduites à fluide sous pression, comportant les éléments suivants :
a) il est prévu un dispositif à soupapes (2) alimenté depuis une source de fluide sous pression (1) et comportant une première soupape (6) pour l'alimentation commandée en fluide sous pression dans une première conduite à fluide sous pression (8) et une seconde soupape (10) pour l'alimentation commandée de fluide sous pression dans une seconde conduite à fluide sous pression (12) ;
b) il est prévu un dispositif à soupape de commande (3) pour commander la pression dans la seconde conduite à fluide sous pression (12) en fonction de la pression dans la première conduite à fluide sous pression (8) ;
c) le dispositif à soupape de commande (3) comprend une chambre d'entrée de fluide sous pression (59) et une chambre de sortie de fluide sous pression (32) reliée ou susceptible d'être reliée à un dispositif consommateur (45) de la seconde conduite à fluide sous pression (12), ainsi qu'une soupape d'entrée (43, 22) pour relier la chambre de sortie de fluide sous pression (32) à la chambre d'entrée de fluide sous pression (59) ;
d) le dispositif à soupape de commande (3) comprend un dispositif d'actionnement (34, 50, 37, 48) susceptible d'être activé en fonction de la pression dans la première conduite à fluide sous pression (8), pour actionner la soupape d'entrée (43, 22), le dispositif d'actionnement (34, 50, 37, 48) étant réalisé et agencé par rapport à la soupape d'entrée (43, 22) de manière à transférer la soupape d'entrée (43, 22) depuis sa position de fermeture jusque dans sa position d'ouverture lorsque la pression dans la première conduite à fluide sous pression (8) a augmenté jusqu'à une hauteur de pression déterminée a titre de pression d'ouverture pour la soupape d'entrée (43, 22) ;
caractérisé en ce que
e) la chambre d'entrée de fluide sous pression (59) du dispositif à soupape de commande (3) est susceptible d'être alimentée par la pression commandée par la seconde soupape (10) ;
f) le dispositif à soupape de commande (3) comprend une soupape de sortie (38, 22) pour relier la chambre de sortie de fluide sous pression (32) à une bâche à fluide sous pression, ladite soupape étant en liaison d'action avec le dispositif d'actionnement (34, 50, 37, 48) de telle sorte qu'elle peut être amenée par celui-ci, en fonction de la pression d'ouverture prédéterminée pour la soupape d'entrée (43, 22), depuis sa position d'ouverture jusque dans sa position de fermeture, avant que la soupape d'entrée (43, 22) soit amenée dans sa position d'ouverture.

2. Dispositif selon la revendication 1, caractérisé en ce que le dispositif à soupapes (2) est réalisé sous forme d'une soupape de protection à circuits multiples et en ce que tant la première soupape (6) que la seconde soupape (10) sont réalisées sous forme de soupapes de décharge.

3. Dispositif selon l'une ou l'autre des revendications précédentes, caractérisé par les éléments suivants :
a) le dispositif d'actionnement est constitué par un piston de commande (34, 50) et par un poussoir de soupape (37, 48), le poussoir de soupape (37, 48) étant en liaison avec le piston de commande (34, 50) ;
b) le poussoir de soupape (37, 48) est mené, avec étanchement par un élément d'étanchéité (61), à travers une ouverture (62) dans une paroi séparant la chambre de sortie de fluide sous pression (32) vis-à-vis d'un espace postérieur au piston (42), et il s'étend par son extrémité détournée du piston de commande (34, 50) jusque dans la chambre de sortie à fluide sous pression (32), l'extrémité du poussoir de soupape (37, 48) détournée du piston de commande (34, 50) étant tournée vers un organe de soupape (22) qui forme avec un siège d'entrée (43) la soupape d'entrée (43, 22) ;
c) le poussoir de soupape (37, 48) est réalisé, au niveau de son extrémité tournée vers l'organe de soupape (22), sous forme d'un siège de sortie (38) et il comprend un perçage (63) qui part du siège de sortie (38) et s'étend jusque dans le poussoir de soupape (37, 48) et auquel se raccorde un perçage transversal (39) débouchant dans l'espace postérieur au piston (42) ;
d) le siège de sortie (38) forme avec l'organe de soupape (22) la soupape de sortie (38, 22) ;
e) l'espace postérieur au piston (42) est relié à la bâche à fluide sous pression via une ouverture de mise à l'air (40) dans la paroi du carter (41) du dispositif à soupape de commande (3) ;
f) pour la force de rappel pour le piston de commande (34, 50) sert un ressort (33) qui est agencé dans l'espace postérieur au piston (42) et qui attaque le piston de commande (34, 50) en direction de fermeture de la soupape d'entrée (43, 22) et en direction d'ouverture de la soupape de sortie (38, 22) ;
g) le piston de commande (34, 50) comprend sur son côté détourné de l'espace postérieur au piston (42) au moins une surface d'action (35, 36) qui est susceptible d'être attaquée par le fluide sous pression d'au moins une conduite à fluide sous pression (8, 9) indépendante de la seconde conduite à fluide sous pression (12).

4. Dispositif selon l'une quelconque des revendications précédentes, caractérisé par les éléments suivants :
a) le piston de commande (34, 50) comprend une première surface d'action (36) et une seconde surface d'action (35), la première surface d'action (36) délimitant une première chambre de commande (54) et la seconde surface d'action (35) délimitant une seconde chambre de commande (60) ;
b) la première chambre de commande (54) est reliée, via une entrée de commande (27) du dispositif à soupape de commande (3) et via une conduite à fluide sous pression servant de conduite de commande (23), à la première conduite à fluide sous pression (8) ;
c) la seconde chambre de commande (60) est reliée, via un second raccord de commande (28) du dispositif à soupape de commande (3) et via une conduite à fluide sous pression servant de conduite de commande (24), à une troisième conduite à fluide sous pression (9) indépendante de la première conduite à fluide sous pression (8) ;
d) une entrée de fluide sous pression (57) reliée à la chambre d'entrée de fluide sous pression (59) du dispositif à soupape de commande (3) est en liaison, via une conduite à fluide sous pression (29), avec la sortie de fluide sous pression de la seconde soupape (10).

5. Dispositif selon la revendication 3, caractérisé en ce qu'il est prévu des moyens d'actionnement pour la soupape d'entrée (43, 22) et pour la soupape de sortie (22, 38) qui sont en liaison d'action avec le poussoir de soupape (48) ou qui sont susceptibles d'être amenés en liaison d'action avec celui-ci, qui peuvent être actionnés manuellement indépendamment du piston de commande (50).

6. Dispositif selon la revendication 5, caractérisé en ce que les moyens d'actionnement pour la soupape d'entrée (43, 22) et pour la soupape de sortie (22, 38) sont constitués par un prolongement du poussoir de soupape (48), lequel est relié structurellement au poussoir de soupape (48) et qui sert de bouton-poussoir, le prolongement (47) étant mené hors du carter (41) du dispositif à soupape de commande (3).

7. Dispositif selon la revendication 5, caractérisé en ce que les moyens d'actionnement pour la soupape d'entrée (43, 22) et pour la soupape de sortie (22, 38) sont constitués par un bouton-poussoir (47) qui est en liaison d'action ou susceptible d'être amené en liaison d'action avec le poussoir de soupape (48), le poussoir de soupape (48) et/ou le bouton-poussoir (47) étant mis en place avec ajustement et avec étanchement dans un évidement médian (49) du piston de commande (50) et étant mobile en direction axiale par rapport au piston de commande (50), le bouton-poussoir (47) étant mené hors du carter (41) du dispositif à soupape de commande (3).

8. Dispositif selon l'une au moins des revendications précédentes 5, 6 et 7, caractérisé en ce que les moyens d'actionnement comprennent, entre le piston de commande (50) et le bouton-poussoir (47) ou entre le piston de commande (50) et le poussoir de soupape (48), un dispositif d'enclenchement/déclenchement au moyen duquel le poussoir de soupape (48) peut être fixé dans deux positions différentes sur le piston de commande (50).

9. Dispositif selon la revendication 8, caractérisé en ce que pour fixer le poussoir de soupape (48) sur le piston de commande (50), il est prévu sur le poussoir de soupape (48) ou sur le bouton-poussoir (47) ou encore sur le piston de commande (50) un premier renfoncement (51) et un second renfoncement (52), dans lesquels s'enclenche un élément d'encliquetage (53) agencé sur le piston de commande (50) ou sur le poussoir de soupape (48) ou encore sur le bouton-poussoir (47).

10. Dispositif selon l'une au moins des revendications précédentes 5, 6, 7, 8 et 9, caractérisé en ce qu'une première butée (55) et une seconde butée (56) sont agencées sur le poussoir de soupape (48), la première butée (55) étant agencée de telle sorte par rapport au piston de commande (50) que lors d'un mouvement du piston de commande (50) en direction d'ouverture de la soupape d'entrée (43, 22), le poussoir de soupape (48) est entraîné par le piston de commande (50) dans la même direction, et la seconde butée (56) étant ainsi agencée par rapport à la paroi séparant l'espace postérieur au piston (42) vis-à-vis de la chambre de sortie de fluide sous pression (32) que la seconde butée (56) limite, lors d'une course du poussoir de soupape (48) en direction d'ouverture de la soupape d'entrée (43, 22), la course du poussoir de soupape (48) dans cette direction.

11. Dispositif selon l'une au moins des revendications précédentes, caractérisé en ce que le dispositif à soupape de commande (3) est intégré dans le dispositif à soupapes (2).

12. Dispositif selon la revendication 9, caractérisé en ce que le premier renfoncement (51) et le second renfoncement (52) sont ainsi ménagés l'un par rapport à l'autre et par rapport à l'élément d'encliquetage (53), que lors d'un actionnement du bouton-poussoir (47) en direction de fermeture de la soupape de sortie (38, 22) et en direction d'ouverture de la soupape d'entrée (43, 22), le poussoir de soupape (48) avec le bouton-poussoir (47) et le piston de commande (50) sont déplacés l'un par rapport à l'autre, l'élément d'encliquetage (53) parvenant depuis le premier renfoncement (51) jusque dans le second renfoncement (52), et que lors d'une attaque successive du piston de commande (50) par une pression de commande et lors d'un mouvement qui en résulte du piston de commande (50) en direction de la soupape d'entrée (43, 22), il s'effectue un mouvement relatif entre le piston de commande (50) et le poussoir de soupape (48) avec le bouton-poussoir (47), l'élément d'encliquetage (53) revenant alors depuis le second renfoncement (52) jusque dans le premier renfoncement (51), et lors d'une suppression successive de la pression de commande, le poussoir de soupape (48) avec le bouton-poussoir (47) est entraîné par le piston de commande (50) en direction de sa position de départ.

13. Dispositif selon l'une au moins des revendications précédentes, caractérisé en ce qu'un clapet anti-retour (4) bloquant en direction de la chambre de sortie de fluide sous pression (32) est agencé entre la chambre de sortie de fluide sous pression (32) du dispositif à soupape de commande (3) et le dispositif consommateur (45).

14. Installation de freinage de véhicule actionnée par fluide sous pression, comportant un dispositif selon la revendication 4, caractérisée en ce que la première conduite à fluide sous pression (8) est associée à un premier circuit de fluide sous pression servant de premier circuit de freinage de service, la seconde conduite à fluide sous pression (12) est associée à un second circuit de fluide sous pression servant de circuit de frein de stationnement, et la troisième conduite à fluide sous pression (9) est associée à un troisième circuit de fluide sous pression servant de second circuit de freinage de service de l'installation de freinage de véhicule actionnée par fluide sous pression.

15. Installation de freinage de véhicule actionnée par fluide sous pression, comportant un dispositif selon la revendication 14, caractérisée en ce que la première soupape (6) est associée au premier circuit de fluide sous pression servant de premier circuit de freinage de service, la seconde soupape (10) est associée au second circuit de fluide sous pression servant de circuit de frein de stationnement, et une troisième soupape (7) est associée au troisième circuit de fluide sous pression servant de second circuit de freinage de service.

16. Installation de freinage de véhicule actionnée par fluide sous pression, comportant un dispositif selon la revendication 15, caractérisée en ce que la troisième soupape (7) est réalisée sous forme d'une soupape de décharge.

17. Installation de freinage de véhicule actionnée par fluide sous pression, comportant un dispositif selon l'une ou l'autre des revendications précédentes 14 et 15, caractérisée en ce que la sortie de fluide sous pression (21) du dispositif à soupape de commande (3) est susceptible d'être reliée, via une conduite à fluide sous pression (31) et via une soupape de frein de stationnement (44) agencée dans celle-ci, à un cylindre de frein à ressort accumulateur (45) servant de dispositif consommateur.
